# EUROPÄISCHE PATENTANMELDUNG

(11) **EP 3 153 848 A1**
(43) Veröffentlichungstag der Anmeldung: **12.04.2017**
(21) Anmeldenummer: 15188903.7
(22) Anmeldetag: 08.10.2015
(51) Int. Cl.: G01N 21/90, G02B 13/00, G02B 15/10

(54) **OPTISCHES SYSTEM**

(71) Anmelder: Seidenader Maschinenbau GmbH, 85570 Markt Schwaben (DE)
(72) Erfinder: Knülle, Dr. Matthias, 85617 Aßling / OT Loitersdorf (DE); deCrignis, Markus, 81373 München (DE); Kwoka, Marcin, 85661 Forstinning (DE); Hagl, Michael, 83527 Kirchdorf (DE)
(74) Vertreter: Laufhütte, Dieter

(57) **Zusammenfassung**

Die vorliegende Erfindung betrifft ein optisches System zur Inspektion von Proben, vorzugsweise Proben mit Zylinderflächen, dass ein Standard-Objektiv, das nahe oder direkt an einer Kamera angeordnet ist, und eine als Projektiv bezeichnete Hilfsoptik, die im Strahlengang gegenstandsseitig zu dem Standard-Objektiv angeordnet ist, umfasst. Nach einer bevorzugten Ausführungsform sind das Standard-Objektiv und das Projektiv räumlich zueinander so ausgerichtet, dass die Eintrittspupille des Standard-Objektivs die Austrittspupille des Projektivs ist. Da bei der Erfindung keine Blende gegenstandsseitig vor der ersten Linsenfläche des Projektivs notwendig ist, können Proben am Ort der Eintrittspupille positioniert werden, ohne dass es zu Kollisionen kommt.

## Beschreibung

Die vorliegende Erfindung betrifft ein optisches System zur Inspektion von Proben, vorzugsweise von Zylinderflächen oder Bohrungen von Proben wie Vials, Verschlusskappen oder Bördelkappen.

In der Regel werden hierzu optische Systeme verwendet, deren Eintrittspupille weit vor der ersten Linsenfläche liegt. Dadurch wird im Objektraum ein X-förmiger Strahlengang der Hauptstrahlen erreicht, der aufgrund seiner Form sowohl die Passage des Strahlengangs durch enge Öffnungen wie Flaschenhälse bei der Inspektion von Flaschenböden und Flascheninnenwände erlaubt und auch die seitliche Betrachtung von Außen- oder Innenwänden inklusive der Bodenfläche von zylinderförmigen Proben wie Verschluss- oder Bördelkappen ermöglicht.

Insbesondere bei kleinen Kappen werden entozentrische Strahlengänge mit weit vor der ersten Scheitelfläche liegender Eintrittspupille und möglichst großen Strahlwinkel zur Betrachtung der zylinderförmig ausgestalteten Innenfläche der Kappe gefordert. Der Strahlwinkel ist hierbei der Winkel zwischen der optischen Achse und den Hauptstrahlen.

Beispielsweise gibt es für die Inspektion von Bohrungen teure Spezialobjektive, die an der Frontfläche als Eintrittspupille eine Blende vor der ersten Linsenfläche aufweisen. Die Blendendurchmesser bei diesen Spezialobjektiven sind fix und können nicht eingestellt werden. Die auf dem Markt verfügbaren Spezialobjektive erlauben aufgrund des fix eingestellten Blendendurchmessers keine Steuerung der Schärfentiefe oder der Belichtung, wie dies typischerweise bei einem Standardobjektiv über eine Irisblende möglich ist.

Zudem behindert die an der Frontfläche vor der ersten Linsenfläche angeordnete Blende die Beleuchtung der Innenflächen einer Probe, da die zur Beleuchtung einer Probe genutzte Beleuchtungseinheit in der Regel wenige Millimeter bis einige Zentimeter vor der Probe positioniert wird. Dadurch wird der Lichteintritt durch die Fassung der Eintrittspupille bei kleinen Probendurchmessern erheblich behindert. Somit ist es schwer, Licht von der Seite auf die Probe strahlen zu lassen, was aber von Vorteil für einen besseren Bildkontrast wäre.

Zudem ist die Inspektion von kleinen Vials nicht ohne Probleme möglich, da hierbei die Eintrittspupille auf Höhe des Flaschenhalses liegen muss, um eine freie Passage des Strahlengangs zur Innenfläche des Vials zu gewährleisten. Eine solche Anordnung ist mit dem im Stand der Technik bekannten Spezialobjektiven nicht möglich, da es bei der gewünschten Anordnung des Vials, bei der die Eintrittspupille auf Höhe des Flaschenhalses liegt, zu einer Kollision mit dem Objektiv kommt.

Zudem ist aufgrund der Eintrittspupillenblende eine über das gesamte Bildfeld homogene Lichteinkopplung mit einer Beleuchtungseinheit, die die Probe mit über mindestens eine Linse des Objektivs gelenktem Licht bestrahlt, kaum möglich.

Es ist die Aufgabe der vorliegenden Erfindung die vorstehend aufgeführten Nachteile zumindest teilweise zu überwinden, um ein verbessertes optisches System zur Inspektion von Proben zu schaffen. Diese Aufgabe wird durch ein optisches System mit den Merkmalen des Anspruchs 1 gelöst.

Demnach umfasst ein optisches System zur Inspektion von Proben, vorzugweise Proben mit Zylinderflächen, ein Standard-Objektiv, das nahe oder direkt an einer Kamera angeordnet ist, und eine als Projektiv bezeichnete Hilfsoptik, die im Strahlengang gegenstandsseitig zu dem Standard-Objektiv angeordnet ist.

Die Zweiteilung des optischen Systems in Standard-Objektiv, das direkt oder nahe der Kamera angeordnet ist, und dem Projektiv oberhalb der Probe bewirkt den Vorteil, dass keine Blende vor der ersten Linsenfläche des Projektivs benötigt wird. In anderen Worten bedeutet dies, dass zwischen der Linsenfläche des Projektivs, die der Probe am nächsten ist, und der Probe selbst keine hindernden Bauteile wie ein Blende oder dergleichen vorhanden sind, sodass die Probe am Ort der Eintrittspupille positioniert werden kann, ohne dass es zu Kollisionen kommt.

Vorzugsweise umfasst das Standard-Objektiv des optischen Systems eine einstellbare Blende, die die Funktion einer Systemblende übernimmt.

Nach einer weiteren Modifikation der Erfindung sind das Standard-Objektiv und das Projektiv räumlich zueinander so ausgerichtet, dass die Objektweite und das Bildfeld an das Objekt angepasst sind, wobei zusätzlich auch die Objektbrennweite und/oder die Kamera, d.h. die Sensorgröße, variiert werden kann.Gleichzeitig wird die Eintrittspupille des Objektivs durch das Projektiv am gewünschten Ort vor dem Projektiv (z. B. der Engstelle am Flaschenhals) abgebildet.

Weiter vorzugsweise sind das Standard-Objektiv und das Projektiv räumlich zueinander so ausgerichtet, dass die Eintrittspupille des Objektivs in kurzem Abstand vor der ersten Linsenfläche des Projektivs abgebildet ist, vorzugsweise in einem Bereich von 1 mm bis 300 mm vor der ersten Linsenfläche des Projektivs. Dieses Abbild ist die Eintrittspupille des Projektivs und somit des gesamten Systems. Die Feinfokussierung erfolgt über die Fokussierung des Objektivs und/oder über die Feinabstimmung des Abstandes zwischen Objektiv und Projektiv.

Durch die Anpassung des Abstandes von Objektiv und Projektiv kann der Abstand der Eintrittspupille zur Objektebene der jeweiligen Situation angepasst werden, was für die Inspektion unterschiedlich hoher Flaschen unabdingbar ist.

Gemäß einer weiteren optionalen Modifikation der Erfindung umfasst das Projektiv Doppel-Achromat-Projektive oder besteht aus diesen. Die Doppel-Achromat-Projektive umfassen zwei geeignet gewählte Standard-Achromaten. Hierdurch kann eine Verbesserung der Strahlwinkel und insbesondere der Abbildungsgüte erreicht werden. Doppel-Achromat-Projektive, das heißt Projektive, die basierend auf genauen Strahlengangberechnungen aus zwei geeignet gewählten Standard-Achromaten aufgebaut sind, werden als Projektiv verwendet. Projektive dieser Art lassen sich für die oben genannten Einsatzgebiete kostengünstiger realisieren als die hierfür auf dem Markt befindlichen Spezialoptiken. Zugleich sind sie aufgrund der freien Kombinierbarkeit mit unterschiedlichen Objektiven wesentlich flexibler einsetzbar.

Vorzugsweise umfasst das Projektiv ein Weitwinkel-Okular, insbesondere ein solches mit einem Strahlwinkel von 35° oder mehr. Solche Okulare sind derzeit für die Beobachtung an Teleskopen weit verbreitet.

Die am Okular auftretenden Objekt- und Bildweiten sind grundlegend verschieden im Vergleich zu einem Strahlengang an einem Teleskop. Sie entsprechen somit nicht der optischen Korrektur des Okulars, was negative Folgen für die Öffnungsfehler-Korrektur (sphärische Aberration) mit sich bringt.

Das optische System zur Inspektion von Proben benötigt eine hohe Schärfentiefe und somit vergleichsweise kleine Blendewerte (am Objektiv einstellbar). Da die Eintrittspupille des Objektivs aufgrund der gewählten Anordnung und Abstände durch das Okular stark verkleinert abgebildet wird, tritt der Öffnungsfehler kaum in Erscheinung und bleibt ohne Auswirkung auf die Inspektion.

Durch das Fehlen einer Blende vor dem Projektiv und aufgrund der vorzugsweise mit Weitwinkel-Okularen zu erreichenden sehr großen Strahlwinkel und dem damit einhergehenden Objektabständen lassen sich zwei verschiedene Arten der Probenbeleuchtung realisieren.

Nach einer vorteilhaften Modifikation der Erfindung umfasst das optische System eine Beleuchtungseinheit, die Licht unterhalb des Projektivs auf eine Probe lenkt. Hierbei wird Licht zwischen der Probe und dem Projektiv auf die Probe gelenkt. So kann beispielsweise eine Dunkelfeldbeleuchtung umgesetzt werden, bei der Licht von der Seite unter einem sehr flachen Winkel auf die Probe fällt.

Nach einer weiteren optionalen Fortbildung der Erfindung umfasst das optische System eine alternative oder zusätzliche Beleuchtungseinheit, die Licht oberhalb des Projektivs einkoppelt, um Licht über das Projektiv direkt auf die Probe zu lenken. Auf diese Weise sind sehr kompakte Anordnungen realisierbar, da die Beleuchtungseinheit nun nicht mehr unterhalb (gegenstandsseitig) zu dem Projektiv angeordnet ist.

Vorteilhaft kann auch eine Beleuchtungseinheit vorgesehen sein, die Licht unterhalb des Objektes, bspw. einer Glasflasche oder Kappe auf eine Probe lenkt.

Dabei kann bei jeder der zwei Arten der Objektbeleuchtung die Beleuchtungseinheit ein Ringlicht oder auch ein gegebenenfalls homogenes Flächenlicht (Hintergrundlicht) sein.

Vorzugsweise ist bei der Inspektion von Zylinderinnenflächen einer Probe die Eintrittspupille des Projektivs zwischen Probe und Objektiv, vorzugsweise zwischen Probe und Projektiv angeordnet.

Nach einer weiteren Ausführungsform der vorliegenden Erfindung ist das optische System bei der Inspektion von Zylinderaußenflächen einer Probe so ausgelegt, dass die Eintrittspupille des Projektivs hinter der Probe angeordnet ist, also die Probe zwischen Eintrittspupille und Projektiv angeordnet ist, um einen hyperzentrischen Strahlengang zu erreichen.

Hyperzentrische Strahlengänge sind notwendig, um die Außenflächen zylindrischer Proben wie Kappen oder Stopfen bei Anordnung der Kamera in der Rotationsfläche der zylindrischen Probe zu betrachten. Dies wird erreicht durch eine Eintrittspupillenlage vor der Objektebene. Die vor der Objektebene liegende Eintrittspupille ist nicht zugänglich, sie ergibt sich alleine aus der Lage der Eintrittspupille des Objektivs und des Projektivs.

Auch solche Perspektiven lassen sich mit Hilfe handelsüblicher, extremer Weitwinkel-Okulare in Kombination mit einem Standard-Objektiv erreichen. Der Abfall der Bildgüte, bedingt durch die noch extremere Abweichung von den Objekt- und Bildweiten am Teleskop oder Mikroskop, ist aufgrund der sehr kleinen Pupillendurchmesser gering.

Durch die Trennung der Inspektionsoptik in Projektiv und Objektiv lassen sich die optischen Parameter flexibler einstellen als mit einer herkömmlichen Spezialoptik. So ermöglicht die einstellbare Blende des Standard-Objektivs die Steuerung der Lichtintensität, was bei Spezialoptiken nicht möglich ist. Weiterhin ist von Vorteil, dass handelsübliche Okulare für die Amateur-Astronomie aufgrund einer sehr hohen Konkurrenz unter den Anbietern kostengünstig und in hoher Qualität in verschiedensten Ausführungen erhältlich sind. Diese Okulare erlauben gegenüber dem Doppel-Achromat-Projektiven, die vorzugsweise bei entozentrischen Strahlengängen Verwendung finden, eine erneute Kostenreduzierung bei noch größeren Strahlwinkeln und einer etwa gleichwertigen Abbildungsgüte.

Alternative Lösungen zur Inspektion von Proben bzw. zur Inspektion der Außenflächen und/oder der Innenwandungen von Kappen und Stopfen durch Mehrfachaufnahmen über Spiegelsysteme oder mit Hilfe einer Kamerastation und einem Rotationsstern sind entschieden aufwändiger.

Nachfolgend werden anhand der in Zeichnungen dargestellten Ausführungsformen der Erfindung weitere Vorteile und Merkmale offenbart. Es zeigen:
- Fig. 1:: den Strahlengang eines erfindungsgemäßen optischen Systems, der entozentrisch ausgebildet ist und Anwendung bei der Inspektion von Kappen und/oder Stopfen findet,
- Fig. 2:: den Strahlengang des erfindungsgemäßen optischen Systems, der entozentrisch ausgebildet ist und Anwendung bei einer Leerglasinspektion findet, und
- Fig. 3:: den Strahlengang des erfindungsgemäßen optischen Systems, der hyperzentrisch ausgebildet ist und zur Inspektion von Zylinderaußenflächen von Kappen und/oder Stopfen angewendet werden kann.

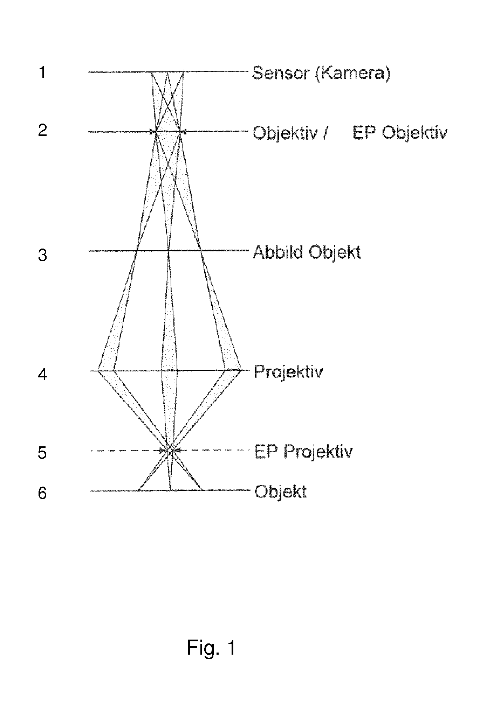

In Fig. 1 erkennt man den Sensor bzw. die Kamera 1, sowie ein im Strahlengang gegenstandsseitig davon angeordnetes Standard-Objektiv 2. Unterhalb des Standard-Objektivs 2 ist ein Projektiv 4 angeordnet. Das Projektiv ist oberhalb (filmseitig) des Objekts 6 (Probe) angeordnet, wobei die Eintrittspupille 5 des Projektivs zwischen Projektiv 4 und Objekt 6 liegt. Für die Inspektion von Innenflächen, z.B. von Kappen, Stopfen und ähnlichen typischerweise zylinderförmigen Proben 6 wird der Abstand von Objektiv 2 und Projektiv 4 so gewählt, dass die Eintrittspupille 5 knapp oberhalb der Objektebene liegt.

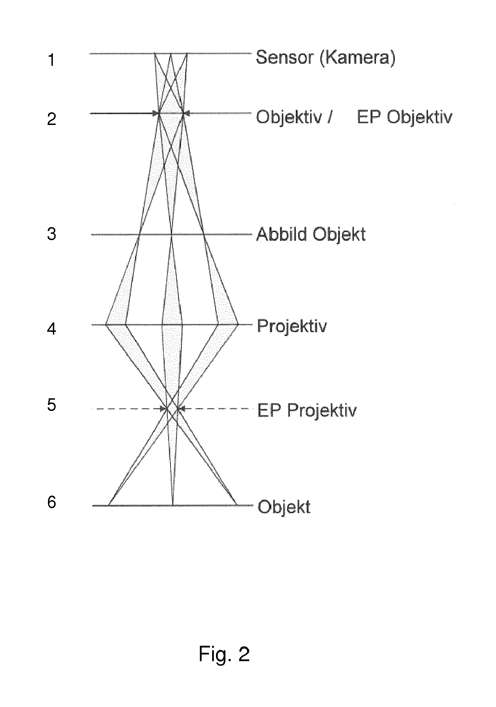

Fig. 2 zeigt einen Strahlengang des erfindungsgemäßen optischen Systems für die Inspektion der Innenflächen von leeren Glasflaschen (Vials). Hierbei wird der Abstand von Objektiv 2 und Projektiv 4 so gewählt. dass die Eintrittspupille 5 des Projektivs genau im Bereich des Flaschenhalses zu liegen kommt. Dadurch werden Kollisionen des Strahlengangs mit der Probe bzw. mit dem Flaschenhals eine flaschenförmigen Probe vermieden und es ist eine Betrachtung der Zylinderinnenflächen der flaschenförmigen Probe 6 möglich.

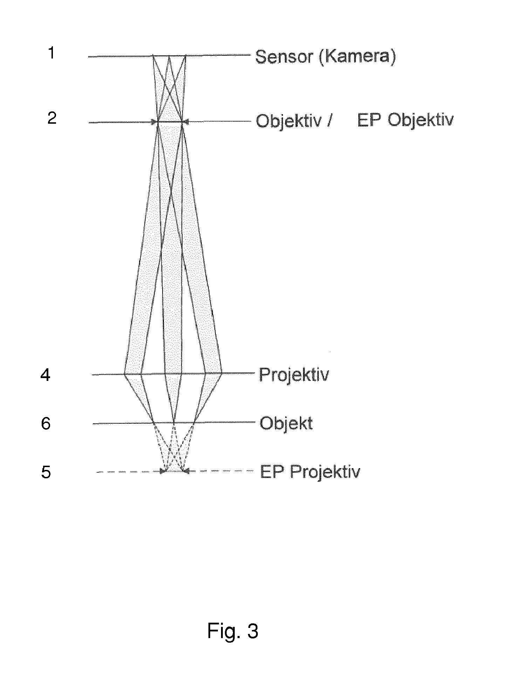

Fig. 3 zeigt einen Strahlengang des erfindungsgemäßen optischen Systems zur Inspektion von Außenflächen einer Probe wie beispielsweise Kappen und/oder Stopfen. Hierbei wird der Abstand zwischen dem Objektiv 2 und dem Projektiv 4 so gewählt, dass die Eintrittspupille 5 des Projektiv 4 unterhalb der Objektebene liegt. Durch diesen hyperzentrischen Strahlengang lassen sich mit Hilfe nur einer Abbildung die Seitenflächen zusammen mit einer Stirnseite einer Probe 6 inspizieren.

## Patentansprüche

1. Optisches System zur Inspektion von Proben (6), vorzugsweise Proben (6) mit Zylinderflächen, umfassend:
ein Standard-Objektiv (2), das nahe oder direkt an einer Kamera (1) angeordnet ist, und
eine als Projektiv (4) bezeichnete Hilfsoptik, die im Strahlengang gegenstandsseitig zu dem Standard-Objektiv (2) angeordnet ist.

2. Optisches System nach Anspruch 1, wobei das Standard-Objektiv (2) und das Projektiv (4) räumlich zueinander so ausgerichtet sind, dass die Objektweite und das Bildfeld an das Objekt angepasst sind und dass gleichzeitig die Eintrittspupille des Objektivs (2) durch das Projektiv am gewünschten Ort vor dem Projektiv (4) abgebildet wird.

3. Optisches System nach einem der vorhergehenden Ansprüche, wobei das Standard-Objektiv (2) eine einstellbare Blende aufweist, die die Funktion einer Systemblende übernimmt.

4. Optisches System nach einem der vorhergehenden Ansprüche, wobei das Standard-Objektiv (2) und das Projektiv (4) räumlich zueinander so ausgerichtet sind, dass die Eintrittspupille des Objektivs in kurzem Abstand vor der ersten Linsenfläche des Projektivs (4) abgebildet ist, vorzugsweise in einem Bereich von 1 mm bis 300 mm vor der ersten Linsenfläche des Projektivs (4).

5. Optisches System nach einem der vorhergehenden Ansprüche, wobei das Projektiv (4) Doppel-Achromat-Projektive umfasst, die zwei geeignet gewählte Standard-Achromaten umfassen.

6. Optisches System nach einem der vorhergehenden Ansprüche, wobei das Projektiv (4) ein Weitwinkel-Okular, vorzugsweise ein solches mit einem Strahlwinkel von 35° oder mehr, ist oder umfasst.

7. Optisches System nach einem der vorhergehenden Ansprüche, ferner umfassend eine Beleuchtungseinheit, die Licht unterhalb des Projektivs (4) auf eine Probe (6) lenkt.

8. Optisches System nach einem der Ansprüche 1 bis 6, ferner umfassend eine Beleuchtungseinheit, die Licht oberhalb des Projektivs (4) einkoppelt, um Licht über das Projektiv (4) direkt auf einen Probe (6) zu lenken.

9. Optisches System nach einem der vorhergehenden Ansprüche, ferner umfassend eine Beleuchtungseinheit, die Licht unterhalb des Objektes auf eine Probe (6) lenkt.

10. Optisches System nach Anspruch 7, 8 oder 9, wobei die Beleuchtungseinheit ein Ringlicht ist.

11. Optisches System nach Anspruch 7, 8 oder 9, wobei die Beleuchtungseinheit ein Flächenlicht ist.

12. Optisches System nach einem der vorhergehenden Ansprüche, wobei zur Inspektion von Zylinder-Innenflächen einer Probe (6) die Eintrittspupille (5) des Projektivs (4) zwischen Probe (6) und Objektiv, vorzugsweise zwischen Probe (6) und Projektiv (4) angeordnet ist.

13. Optisches System nach einem der vorhergehenden Ansprüche, wobei zur Inspektion von Zylinder-Außenflächen einer Probe (6) die Eintrittspupille (5) des Projektivs (4) hinter der Probe (6) angeordnet ist, also die Probe (6) zwischen Eintrittspupille (5) und Projektiv (4) angeordnet ist, um einen hyperzentrischen Strahlengang zu erreichen.
